# EUROPEAN PATENT APPLICATION

(11) **EP 1 345 227 A2**
(43) Date of publication of application: **17.09.2003**
(21) Application number: 03251507.4
(22) Date of filing: 12.03.2003
(51) Int. Cl.: G11B 23/00

(54) **Labelling optical data storage discs**

(30) Priority: 12.03.2002 GB 0205782
(71) Applicant: LETRASET LIMITED, Ashford, Kent TN23 6FL (GB)
(72) Inventor: McKie, Peter, Ashford, Kent TN26 3TE (GB)
(74) Representative: Gallafent, Richard John

(57) **Abstract**

A device for assisting labelling discs such as CD-ROMs is described. The device has a stud (4) which is adapted to engage in the central aperture of the disc and a cylindrical wall (2) which is sized to match the inner circular aperture of a self-adhesive label. By making the stud (4) from a plurality of resilient stepped prongs (7) arranged radially coaxially to the centre of the stud (4), analogously to the stepped prong configuration in a jewel case CD box. This accurately and firmly centres the label on the disc.

## Description

The present invention relates to labelling optical storage discs and, in particular, to devices for assisting with that process.

Optical storage discs, so-called compact discs, were originally developed for storing substantial quantities of data compared to the quantities of data then storable on magnetic material coated discs. In the computer field, the magnetic coated "floppy disc" was superseded, as storage requirements increased, by the so-called CD-ROM. The denomination "ROM" stands for Read Only Memory and, originally, such data-carrying discs were manufactured in a fashion analogous to the methods developed for making so-called compact discs which stored an audio recording in digitised form, normally referred to simply as "CDs". In order to identify what was on the disc, it was customary to apply, by means of an appropriate printing process a legend or design to the face of the disc which is not facing the laser beam with which the discs are "read" in order to extract data therefrom, and this approach to labelling discs continues to be standard for pre-recorded CDs carrying music or the like and for CD-ROMs carrying data such as operating system programmes supplied with a computer or purchased subsequently.

In recent years, however, the technology has been developed so that such discs are not merely capable of having data recorded on them read by an appropriate "disc drive", but rather the so-called recordable discs or "blank discs" are now available together with disc drives which can be driven both in a read mode in order to extract recorded data from the disc and in a write mode in order to write digital data to the disc. Such devices are now becoming prevalent in the computer world, and are particularly valuable in applications where it is desired to store large amounts of data, for example word-processing data for archival purposes, or image data in the graphic arts and related fields. Additionally, blank discs may also be used in digital cameras, and blank DVD's (Digital Versatile Disks) are already being used in the multi-media industry.

It is necessary (since all blank discs look the same) to be able to identify what is recorded on such a recordable disc. This is not usually particularly easy to do simply by writing on the side of the disc which faces away from the read/write head in practice, as the discs are made of plastics materials which do not easily accept markings, and even if they do, do not easily retain them, i.e. the markings can easily be rubbed off. Although special marker pens are available, this is not ideal as some inks contain solvents that can have a deleterious effect on the surface of the blank disc.

A simple method of labelling a disc is to stick a self-adhesive paper label on it. While this may be easily effected, it gives rise to difficulties in practice because application of a paper label otherwise than symmetrically about the axis of the disc gives rise to instability when the disc is spun at high speed during reading data from it or writing data to it. This instability manifests itself in unacceptable wear on the disc drive and/or in damage to the disc and/or the disc drive themselves.

Accordingly, generally circular labels have been developed for application to recordable discs, these labels conventionally being presented in the form of a paper annulus, the inner and exterior boundaries of the annulus being defined by differentially diecutting through a paper layer of a paper/adhesive/release-coated backing labelling laminate.

In order that the instability effects noted above do not occur, it is necessary to apply the label as accurately as possible in terms of its centring. This is almost impossible to do by eye and accordingly a number of devices have been developed to assist in accurately applying the label centrally when labelling blank discs this way.

The patent literature contains several disclosures of devices of a more or less sophisticated nature which are directed to assisting centring such precut labels. Thus, for example, WO 98/26986 discloses a jig type device for supporting a label on to which a disc, located by a centring pin, is then lowered. Such devices are cumbersome to use and take up unnecessary space on the desk. Simple button-type alignment aids have been sold by various label manufacturers, the button having a collar which fits into the hole in the centre of the disc and an exterior skirt about which the label is aligned.

We have found that, despite the relatively tight tolerances to which both labels and recordable discs are produced, using the prior art devices, several of which are available commercially, does not always produce satisfactory results. In particular, there is a tendency for the locating pin, ring or collar with which the central hole in the blank disc is registered to be a relatively loose fit therein and accordingly for the label to be applied not quite centrally.

We have now found that this problem may be overcome, and exact centred labelling achieved, by the use of a label alignment device where the portion engaging with the hole in the middle of the blank disc is arranged to fit snugly. According to the present invention, there is provided a device for assisting labelling discs having a central aperture, the device comprising a stud adapted to engage in the central aperture of the disc and, in fixed relationship to the stud, a cylindrical wall adapted to abut one surface of the disc when the stud is engaged in the central aperture of the disc, the stud and cylindrical wall being coaxial, and characterised in that the stud is formed of a plurality of resilient stepped prongs arranged radially coaxially to the centre of the stud, but each not extending as far as the centre of the stud, the steps on the prongs being adapted to engage the inner cylindrical surface of the aperture in the centre of the disc.

The stud accordingly has the form substantially of the resilient stepped prong configuration well-known for holding conventional music CDs in the ubiquitous "jewel case" packaging. Because the prongs are resilient, they may flex slightly enabling the stud to be pressed into the hole in the middle of the disc. Once so pressed into the hole, the steps act to hold the device snugly and accordingly hold its cylindrical outer surface exactly coaxial with the centre of the hole in the disc. A self-adhesive label may now simply be slipped over the cylindrical wall of the device and allowed to come into contact with the surface of the disc and smoothed down to adhere it thereto. The alignment device is then simply removed to leave the label accurately positioned centrally with respect to the disc itself and accordingly perfectly balanced. The label may be a simple annular shape of known type or any other balanced shape which has its centre of gravity coincident with the central axis of the central aperture.

The device is preferably manufactured as an integral moulded article from an appropriate plastics material, for example

The invention is illustrated by way of example with reference to the accompanying drawings, in which:
Figure 1 shows a top view of a label alignment device in accordance with the invention,
Figure 2 shows one side view of the device of Figure 1,
Figure 3 shows a view from the underneath,
Figure 4 a section through the device, and
Figure 5 a side view at 90° to the view shown in Figure 2.

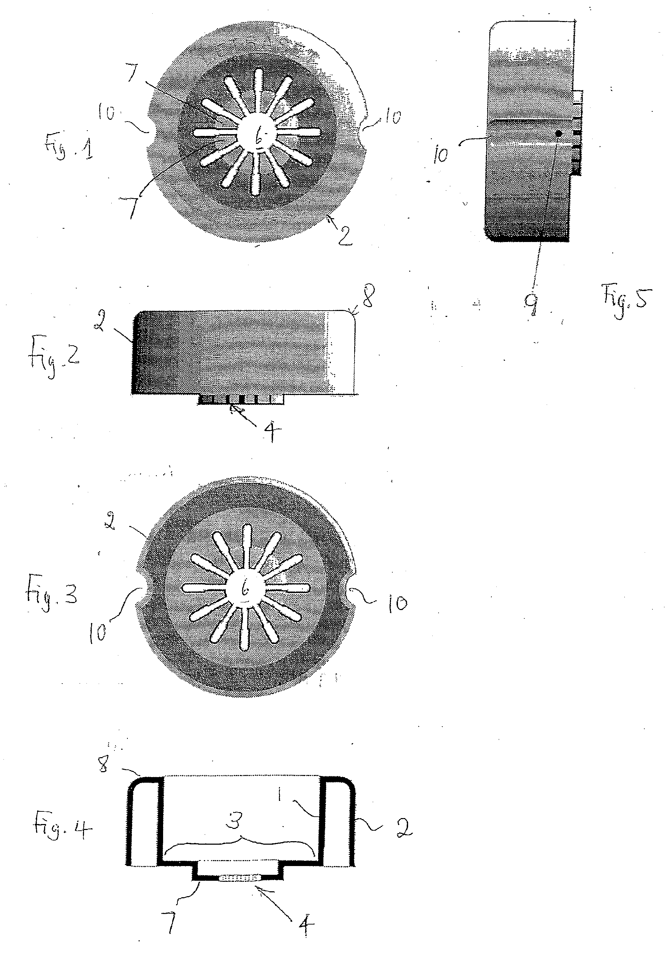

Referring to the drawings, the device consists of an integrally moulded plastics component which may be thought of as consisting of a central cylindrical section 1, a skirt 2 extending from the central cylindrical section at one end and a transverse wall 3 across the other end of the cylindrical section 1. Transverse wall 3 is apertured with a generally star-shaped aperture 6 and has a central section 4 lowered (as shown in Figure 4) with respect to the remainder. The skirt 2 extends as far as the transverse wall 3, but no further. The star-shaped aperture 6 causes the transverse wall to be constituted by a series of radially inwardly directed stepped prongs 7, enabling the lowered section 4 of the transverse wall 3 to be inserted resiliently into the hole in the centre of a recordable disc. The outside of skirt 2 is sized to enable a disc label to be slipped over it and, when that occurs, the disc label is accurately centred. The skirt 2 is curved in section as shown at 8 in Figures 2 and 4 to enable a label to be easily placed over the device and to self-align as it is pushed down towards the disc.

As shown, the skirt 2 has two oppositely located concave axial flutes 10. These do not affect the fit of the label around skirt 2, but they do enable any difficulty arising from the moulding process to be avoided by locating the injection point for the molten plastics material in one of the flutes, e.g. at 9 as indicated on Figure 5.

## Claims

1. A device for assisting labelling discs having a central aperture, the device comprising a stud adapted to engage in the central aperture of the disc and, in fixed relationship to the stud (4), a cylindrical wall (2) adapted to abut one surface of the disc when the stud (4) is engaged in the central aperture of the disc, the stud (4) and cylindrical wall (2) being coaxial, and **characterised in that** the stud (4) is formed of a plurality of resilient stepped prongs (7) arranged radially coaxially to the centre of the stud, but each not extending as far as the centre of the stud, the steps on the prongs being adapted to engage the inner cylindrical surface of the aperture in the centre of the disc.

2. A device according to Claim 1 and formed as an integral moulded article and of plastics material.

3. A device according to Claim 2 wherein the exterior of the cylindrical wall is relieved by at least one flute (10), and wherein the injection point (9) for molten plastics material from which the device is moulded is located in the flute.

4. A device according to any one of Claims 1 to 3 wherein the cylindrical wall has a curved section (8) to assist in self-aligning a label consisting of a paper annulus, the inner boundary of which fits the cylindrical wall.
